Europäisches Patentamt

European Patent Office

Office européen des brevets

(11) Publication number:

**0 387 598**
**A1**

## EUROPEAN PATENT APPLICATION

(21) Application number: **90103796.0**

(22) Date of filing: **27.02.90**

(51) Int. Cl.⁵: **A61C 1/00**

(30) Priority: **27.02.89 US 316080**

(43) Date of publication of application:
**19.09.90 Bulletin 90/38**

(84) Designated Contracting States:
**DE ES FR GB IT SE**

(71) Applicant: **SAXON AIR CONTROLS INC.**
**4360 N.W. 135th Street**
**Miami, Florida 33054(US)**

(72) Inventor: **Peralta, Michael A.**
**4360 N.W. 135th Street**
**Miami, Florida 33054(US)**

(74) Representative: **Kinzebach, Werner, Dr. et al**
**Patentanwälte Reitstötter, Kinzebach und**
**Partner Sternwartstrasse 4 Postfach 86 06 49**
**D-8000 München 86(DE)**

(54) **Portable dental handpiece control apparatus.**

(57) The dental handpiece control apparatus of the present invention comprises a fluidic control unit which controls the discharge of drive air and enter to a dental handpiece. The control unit includes a control chamber, a main inlet connected to a source of pressurized air for pressurizing the control chamber, a main outlet adapted to be connected to the dental handpiece and a control valve for directing air from the main inlet to the main outlet. Air is bled from the control chamber to a secondary chamber which includes means responsive to the pressure in the secondary chamber for varying the position of the control valve relative to the main outlet. An external foot-operated valve controls the pressure in the secondary chamber by adjusting the discharge of bleed-off air from the secondary chamber.

FIG. 1

## FIELD OF INVENTION

This invention relates to a dental handpiece control apparatus and more particularly to a portable assembly for controlling the delivery of air and/or water to a dental handpiece, and for providing variable control over the rotational speed of a dental handpiece.

## DESCRIPTION OF THE PRIOR ART

The dental office includes a dental handpiece control console for controlling the operation of a dental handpiece through a foot switch under the control of the dentist. The console is immobile and provides means for automatically supplying air and water to the handpiece when the handpiece is removed from a holder. A foot control is operationally interposed between a source of compressed air in the dental office and the console manifold for controlling the supply of drive air at a regulated pressure to the console manifold upon actuation of the foot control.

A modular fluidic handpiece control, which was developed by the inventor of the subject application, is shown and described in U.S. Patent No. 4,459,106. The control operates in response to the presence or absence of the handpiece in its hanger. The operation of the control unit is mechanically interrelated to the position of the handpiece in the handpiece hanger and to the operation of a movable valve diaphragm in a sensing chamber of the control unit. The valve diaphragm is positioned to respond to a laminar flow of air from an external source which is directed to flow through the hanger and into the sensing chamber. A substantial improvement in the form of a miniature-sized fluidic control unit is shown and described in U.S. Patent Serial No. 115,198 filed November 2, 1987, which was also developed by the inventor of the subject application. This fluidic control supplies a source of bleed-off air from the drive piston control chamber in the fluidic cassette to a secondary control in the handpiece hanger which, in turn, is responsive to the presence or absence of the handpiece in its holders. No external air jet is required to operate the control unit. The bleed-off air itself operates as a control medium.

The control apparatus of the present invention utilizes the simplification of the miniature fluidic control unit design described in the aforemen tioned U.S. Patent Serial No. 115,198, incorporated herein by reference, in a novel arrangement for operating independent of the presence or absence of the handpiece in the handpiece hanger. Instead the control unit is operated from a secondary, preferably foot-operated, control valve which is under the control of the dentist or other operator of the dental handpiece. The foot-operated control valve operates in concert with the flow of bleed-off air supplied from the fluidic control unit for controlling the main supply of drive air from the compressed air source and for controlling the rotational speed of the handpiece.

In accordance with the present invention, the control apparatus, including the fluidic control unit and foot-operated control valve, may be incorporated in a portable assembly unaffiliated with the dental console in the dental office. Mobility is, at present, limited to control units which require conventionally operated foot controls. This makes the control unit impractical for portable use outside of the dental office. The conventional unit also requires hook up to a conventional supply of air and water. Moreover, only limited control is available to the operator over the speed of the dental handpiece. Conventional controls operate to vary and adjust the drive air at the source in order to provide speed control. Accordingly, at very low speeds, and particularly below 1,500 rpm, speed control is inherently unstable.

The portable unit of the present invention preferably includes its own independent supply of water and operates directly from a source of compressed air without the use of a foot control. This is a significant advantage over prior art control assemblies, both in terms of mobility and cost. Also, the ability to control the handpiece at low and very low speeds below 22,000 rpm, and particularly below 1,500 rpm, avoids splashing of water combined with cleaning pastes, and permits accurate control during the cleaning of teeth and during prosthetic operationary procedures.

## SUMMARY OF THE INVENTION

It is the principal object of the present invention to provide a dental handpiece control apparatus for controlling the supply of air and/or water to a dental handpiece independent of the position or location of the dental handpiece.

It is another object of the present invention to provide an inexpensive dental handpiece control apparatus which incorporates a fluidic control unit responsive directly to a source of compressed air in an arrangement with a foot-operated control valve for varying the rotational speed of a dental handpiece without adjustment of the drive air from the compressor.

It is a further object of the present invention to provide a dental handpiece control apparatus which is portable, light in weight and low in cost.

These and other objects are attained in accordance with the dental handpiece control apparatus of the present invention which comprises:
a fluidic control unit including a control chamber, a main inlet to said control chamber, a main outlet adapted to be connected to a dental handpiece;
means for connecting said main inlet to an external supply of compressed air at a relatively high pressure;
a control valve located in said fluidic control unit for controlling the flow of high pressure air from said control chamber to said main outlet;
means in said fluidic control unit for bleeding air from said control chamber to a secondary chamber at reduced pressure;
means for discharging bleed-off air from said secondary chamber out of said fluidic control unit;
means responsive to the pressure in said secondary chamber for adjusting said control valve between a full open position in which air is supplied through said control value to said main outlet at said high pressure and a closed position; and
manually-operated means for controlling the discharge of said bleed-off air from said fluidic control unit.

## BRIEF DESCRIPTION OF THE INVENTION

Other objects and advantages of the present invention will become apparent from the following detailed description of the invention when read in conjunction with the accompanying drawings of which:

Figure 1 is a schematic block diagram of the dental handpiece control apparatus of the present invention;

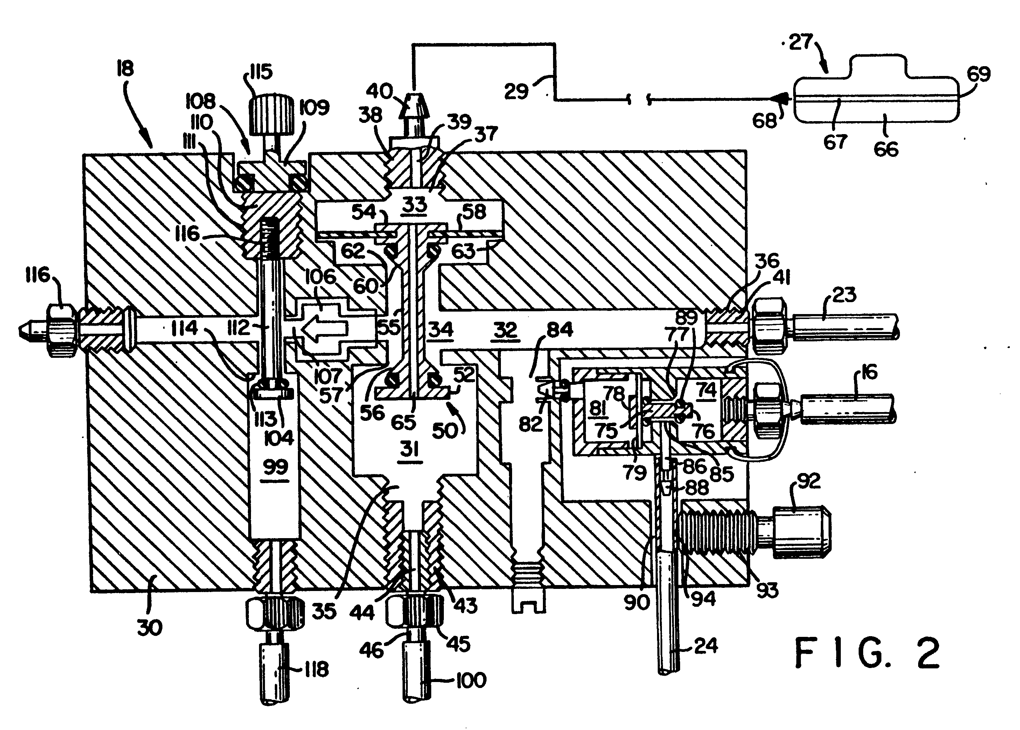

Figure 2 is a plan view in cross-section of the fluidic control unit and the foot control valve of Figure 1;

Figure 3 shows the dental handpiece control apparatus of Figure 1 in a portable housing containing a water tank for mobile use.

## DESCRIPTION OF THE PREFERRED EMBODIMENT

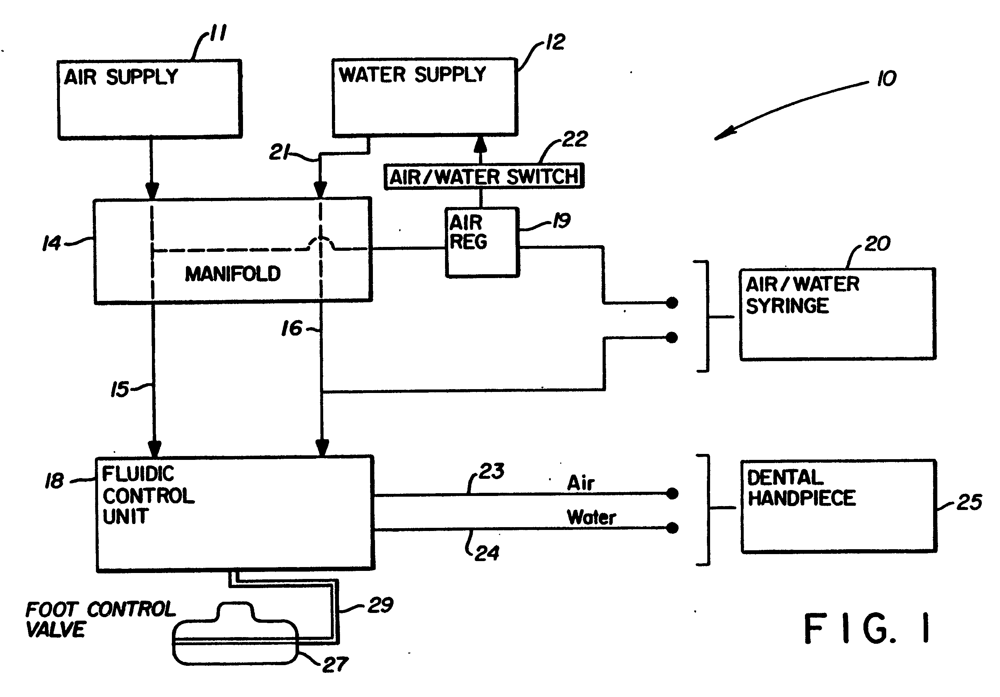

Figure 1 is a schematic block diagram of the overall dental handpiece control apparatus (10) of the present invention. The air supply (11) may be obtained from any conventional supply of compressed air for providing air at a relatively high pressure of between about 40-80 pounds, with a pressure of between 40-60 pounds being preferred.

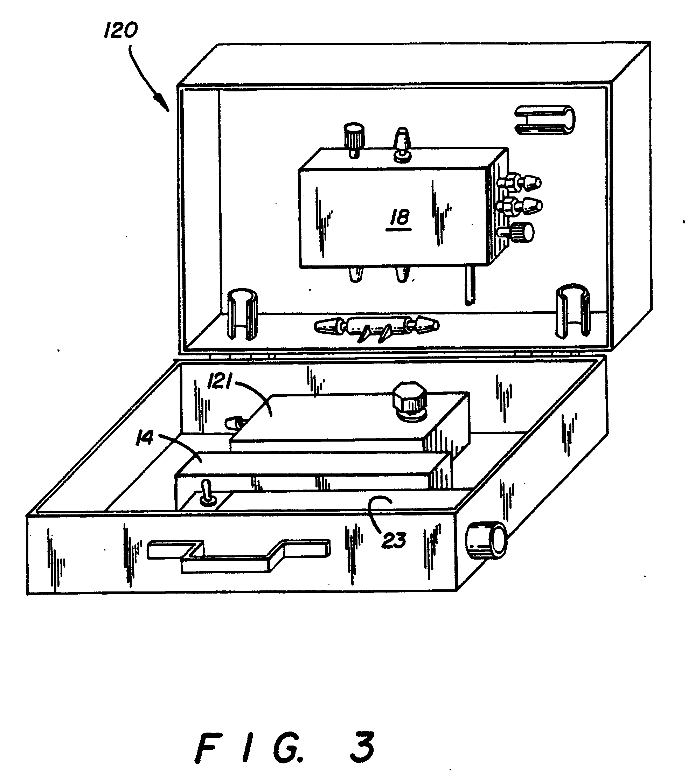

The water supply (12) may be from an externally supplied source of water or from a water tank incorporated in a housing in common with the dental handpiece control apparatus of the present invention for forming a portable unit, as shown in Figure 3, which will be described in greater detail further in the specification.

The air supply (11) and water supply (12) is connected to a common manifold (14) for providing a source of air at high pressure and a source of water to a fluidic control unit (18) through conduits (15) and (16), respectively. Air is supplied from the manifold (14) to an air regulator (19) which provides a regulated source of air at about 30 pounds pressure to a conventional air/water syringe (20). The regulated air is also supplied to a manually-operated air/water switch (22). The water supply (12) may be derived from a conventional pressurized source of water or from an unpressurized water tank. The arrangement shown in Figure 1 is intended for use with an unpressurized water tank as the water supply (12). The water tank is pressurized through the air/water switch (22). The air/water switch (22) is a conventional two-way, manually-operated switch which will pressurize the water tank when in the water position and remove the supply of air to the water tank in the air position. The switch (22) is momentarily opened to atmosphere between switch positions. If a conventional pressurized water supply is used instead of a water tank, the air/water switch (22) would then be placed in line (21) as an on/off switch to open or close the supply of water to the manifold (14).

The fluidic control unit (18) controls the supply of air and water to a conventional dental handpiece (25) through conduits (23) and (24) under the operation of a manually-operated control valve (27). The manually operated control valve (27) is preferably operated as a foot pedal and is externally connected through tubing (29) to the fluidic control unit (18).

The fluidic control unit (18) is formed in the shape of a cassette from a block-like body (30) of a polymeric composition, as described in the corresponding application, U.S. Serial No. 115,198. The body (30) is molded with a plurality of cavities (31), (32) and (33), which are interconnected by an open channel (34) machined through the body (30). A plurality of openings (35), (36), and (37) are also machined through the body (30) into the open cavities (31), (32) and (33), respectively. A threaded fitting (43) is threadably inserted into the opening (35). The threaded fitting (43) has a central passageway (44) and a barbed inlet fitting (45) with a central opening (46) forming the main inlet for drive air into the fluidic control unit (18). A fitting (38) is threadably inserted into the opening (37). The fitting (38) has a central passageway (39) and is connected to a barbed outlet fitting (40). The opening (36) in cavity (32) is threaded to receive a fitting (41) with a central passageway (42).

The cavity (31) forms the main control chamber into which drive air is passed from passageway (44). A main control valve (50) controls the flow of drive air from the cavity (31) to the cavity (32). The main control valve (50) has a lower piston head (52) located in cavity (31), an upper piston head (54) located in cavity (33), and a piston shaft (55) in channel (34) interconnecting the piston head (52) and the piston head (54). The piston head (52) has a conical surface (56) for engaging the valve seat (57) to close the control valve (50) when the piston head (52) is fully depressed into engagement with the valve seat (57). The control valve (50) is opened when the piston head (52) is displaced downwardly, lifting the conical section (56) off the valve seat (57). This provides ingress of drive air from cavity (31) to cavity (32) through channel (34). The degree of opening of the valve seat (57) is selectively controlled by the operator of the dental handpiece (25) based upon the extent of depression of the foot control valve (27), as will be explained in greater detail hereafter.

A flexible strip (58) of a metallic or elastomeric composition is connected to the lower piston head (54) to form a diaphragm which separates the cavity (33) from cavity (34). The upper piston head (54) has a conical surface (60) for engaging the valve seat (62) in its lowermost position. The flexible strip (58) contacts a ledge (63) when the conical section (60) of the piston head (54) engages the valve seat (62).

The control valve (50) has an orifice (65) extending longitudinally through the shaft (55) to provide direct access between cavity (31) and cavity (33). The orifice (65) is a restricted opening of small diameter which permits drive air to bleed into cavity (33) at reduced pressure and at a slow rate. The pressure in cavity (33) is controlled by the foot control valve (27) under the operation of the operator. Thus, the cavity (33) forms a secondary control chamber for controlling the opening of the main valve (50), in response to the foot-operated control valve (27). The foot-operated control valve (27) is a solid body (66) of compressible material, such as silicon rubber with a narrow passageway (67) extending throughout the length of the body (66). A barbed fitting (68) connects the passageway (67) at one end of the body (66) to the outlet fitting (40) of the fluidic control unit (18). The passageway (67) is open to the atmosphere at the opposite end (69). The body (66) is shaped into a desired pedal-like form to be actuated by foot pressure. When the body (66) is fully depressed so that the passageway (67) is closed off, the control valve (50) assumes a full open position at steady state to drive the handpiece (25) at maximum rpm. When the valve body (66) is only partially depressed, the passageway (67) remains partially open, permitting the pressure in cavity (33) to only build up to a pressure level sufficient to displace the conical section (56) of the piston head (52) only partially off the valve seat (57). This provides a controlled and limited access between cavity (31) and cavity (34) in a proportion corresponding to the foot pressure applied to the body (66) of the foot control valve (27). When the passageway (67) is completely open, which occurs when the operator's foot is lifted off the foot control valve (27), the control valve (50) is closed. Operation of the foot control (27) thus provides control over the rotational speed of the handpiece (25) even at very low speeds and is stable below 1,500 rpm.

The flow of water through the fluidic control unit (18) is controlled by a removable water control valve assembly (70) which is inserted into a cavity (72) of the fluidic control unit (18). The water control valve assembly (70) includes an inlet fitting (73) which is connected to the tubing (16) into which water flows from the manifold (14) when the air/water switch (22) in Figure 1 is in the water position. The inlet fitting (73) directs water into an open area (74) in the valve assembly (70). The water control valve assembly (70) also includes a movable piston (75) having a head (76) with an O-ring washer (79) for engaging a valve seat (77) to close off the valve assembly (70) and a head (78) affixed to a diaphragm (79) on the opposite end of the piston (75) for engaging a wall surface (80) to open the valve assembly. The head (78) of the valve assembly (70) is located in an open area (81) which communicates with a barbed fitting (82) in a cross channel (84) in the body (30). The cross channel (84) is open to the cavity (32). The movable piston (75) is axially slidable in a channel (85), which communicates through a passageway (86) to an outlet barbed fitting (88). The outlet barbed fitting (88) is accessible through a drilled channel (90) in the body (30) of the fluidic control unit (18). Tubing (24) is mounted over the fitting (88) for delivering water to the dental handpiece (25) when the valve assembly (70) is open. The amount of water fed through the tubing (24) is controlled by a pinch valve (92) represented by an adjustable screw threaded into a channel (93) in the body (30), with one end (94) adapted to engage the tubing (24).

The position of the piston (75) in the water control valve assembly (70) is controlled by the presence or absence of drive air in cavity (32) and the position of the air/water switch (22). If the air/water switch (22) is in the water position and drive air is unavailable, the water pressure against the piston head (76) will urge the piston (75) and valve assembly (70) to the closed position with the piston head (76) engaging the valve seat (77). If drive air is available, the piston head (78) and diaphragm (79) will be urged to open the valve assembly (70) by the build up of air pressure in area (81), urging the diaphragm (79) against the wall surface (80). When the valve assembly (70) is open, water flows from area (74) through channel (85) into passageway (86) and into the outlet tubing (24) through the barbed fitting (88).

The fluidic control unit (18) also provides for the selection of air coolant when the control valve (50) is open and drive air is delivered to the handpiece (25). The body (30) of the control unit (18) includes a channel (99) through which air coolant will flow when drive air is passed through the open control valve (50). The drive air passes through a check valve (106) into a channel (107) communicating with channel (99), under the control of a manual air coolant adjustment assembly (108). The air coolant adjustment assembly includes a manually adjustable fitting (109) which has a threaded outer body (110) that is threaded into a female thread interior opening (111). An elongated piston (112) extends from the body (116) through the channel (107) into the channel (99). The piston (112) has a head (104) at one end with an O-ring (113) disposed under the head (104). The O-ring (113) is positioned above a ledge (114). The piston (112) has a male thread (116) at its opposite end which is threaded into the body (110). By turning a knurled knob (115) extending from the fitting (109), the piston (112) is forced to turn, moving either upwardly or downwardly in the channel (107). When the O-ring (113) engages the ledge (114), no supplementary air will flow into the channel (99). The amount of air coolant fed through conduit (118) is regulated by adjustment of knob (115). An air gauge (not shown) may be connected to a barbed fitting (116) to read the air pressure of the air supply through the check valve (106).

In Figure 3, a portable case (120) is shown for housing the fluidic control unit (18), a water tank (121) representing the water supply (12), an instrument carrier (122) for holding a dental handpiece (25), and an air/water syringe (not shown). A manifold (14) is shown along with the air regulator (19). Flexible tubing (not shown) is used to interconnect the fittings to the water tank and control unit (18). The foot control valve (27) is an independent miniature component which fits into the case. The only external requirement is a source of high pressure compressed air.

## Claims

1. Dental handpiece control apparatus comprising:
a fluidic control unit in a unified body construction having a control chamber, a main inlet to said control chamber, a main outlet in said unit adapted to be connected to a dental handpiece;
means for connecting said main inlet to an external supply of compressed air at a relatively high pressure;
a control valve located in said unit for controlling the flow of high pressure air from said control chamber to said main outlet;
means in said unit for bleeding air from said control chamber to a secondary chamber at reduced pressure;
means for discharging said bleed-off air from said secondary chamber external of said unit;
means responsive to the pressure in said secondary chamber for adjusting the position of said control valve between an open position in which air is supplied to said main outlet at said high pressure and a closed position; and
manually-operated means for adjusting the discharge of said bleed-off air to control the pressure in said secondary chamber.

2. Dental handpiece control apparatus, as defined in claim 1, wherein said manually-operated means comprises a foot-operated control valve.

3. Dental handpiece control apparatus, as defined in claim 2, wherein said foot-operated control valve comprises a compressible elastomeric structure in the form of a foot pad with a longitudinal passageway extending therethrough, with one end exposed to the atmosphere and the other end coupled to said secondary chamber.

4. Dental handpiece control apparatus, as defined in claim 2, wherein said control valve has a first piston head located in said control chamber, and a second piston head with said means for adjusting the position of said control valve, which is comprised of a flexible strip located in said secondary chamber for moving said second piston head in response to the pressure in said secondary chamber.

5. Dental handpiece control apparatus, as defined in claim 4, further comprising valve means in said control unit for controlling the flow of water from a water supply external of said unit in response to the presence of drive air through said main outlet.

6. Dental handpiece control apparatus, as defined in claim 5, wherein said valve means comprises a movable piston having a first valve head response to the pressure from the water supply for closing said valve mean, a second valve head at the opposite end, and means responsive to the presence of drive air for moving said second valve head for opening said valve means.

7. A portable dental handpiece control assembly comprising a mobile housing for said assembly, a water tank incorporated in said housing for holding a predetermined supply of unpressurized water, means adapted to be connected to a source of compressed air at relatively high pressure, an air regulator, an air/water switch connecting said air regulator to said water tank for pressurizing said water tank when said air/water switch is in the water position, a fluidic control unit for directing said supply of water and said source of air to a dental handpiece, and manually-operated means for controlling said fluidic control unit to adjust the pressure of said source of air to said dental handpiece to vary the rpm of said dental handpiece.

AIR SUPPLY ~11

WATER SUPPLY ~12

10

21

AIR/WATER SWITCH ~22

14

AIR REG ~19

MANIFOLD

20

AIR/WATER SYRINGE

16

15

18 ~ FLUIDIC CONTROL UNIT

23
Air

DENTAL HANDPIECE ~25

Water

24

FOOT CONTROL VALVE

29

27

F I G. I

EP 0 387 598 A1

FIG. 2

F I G.  3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | US-A-4 806 099 (M.A. PERALTA) <br> * Claims; figures 1,2A * <br> --- | 1,2,4-6 | A 61 C 1/00 |
| Y | FR-A-2 399 235 (UNIVERSITY OF QUEENSLAND) <br> * Page 7, lines 2-9; claims 4,6 * | 1,2,4-6 | |
| A | --- | 3,7 | |
| Y | US-A-4 286 949 (R.A. HOLT) <br> * Claims; figure 1 * <br> --- | 7 | |
| Y | EP-A-0 094 470 (G. BERNAZ) <br> * Abstract; figure 3 * <br> --- | 7 | |
| A | US-A-3 568 318 (J.C. MARTIN) <br> --- | | |
| A | US-A-3 961 640 (R.L. BAKER) <br> ----- | | TECHNICAL FIELDS SEARCHED (Int. Cl.5) <br><br> A 61 C <br> F 16 K |

The present search report has been drawn up for all claims

| Place of search | Date of completion of the search | Examiner |
|---|---|---|
| THE HAGUE | 28-06-1990 | VILLENEUVE J-M.R.J. |

EPO FORM 1503 03.82 (P0401)